# FASCICULE DE BREVET EUROPEEN

(11) **EP 0 455 544 B1**
(45) Date de publication et mention de la délivrance du brevet: **09.07.1997**
(21) Numéro de dépôt: 91401105.1
(22) Date de dépôt: 25.04.1991
(51) Int. Cl.: C08L 67/06, C08K 7/14

(54) **Compositions à base de résines polyester non saturées et de nouveaux additifs anti retrait**
Ungesättigte Polyesterharzzusammensetzungen und neues Antischrumpfmittel
Unsaturated polyester resin compositions and new anti-shrinking additives

(30) Priorité: 04.05.1990 FR 9005631
(43) Date de publication de la demande: 06.11.1991
(73) Titulaire: CRAY VALLEY SA, 92800 Puteaux (FR)
(72) Inventeur: Fourquier, Dominique, F-60610 La Croix Saint Ouen (FR); Suspene, Laurent, F-60550 Verneuil en Halatte (FR)
(74) Mandataire: Jolly, Jean-Pierre

(56) Documents cités:
- EP-A- 0 068 487
- US-A- 3 701 748
- US-A- 3 956 421
- US-A- 4 579 890
- CHEMICAL ABSTRACTS, vol. 80, no. 16, 22 Avril 1974, Columbus, Ohio, US; abstract no. 84093V, page 36; colonne L
- CHEMICAL ABSTRACTS, vol. 80, no. 10, 11 Mars 1974, Columbus, Ohio, US; abstract no. 48653U, page 19; colonne L
- CHEMICAL ABSTRACTS, vol. 70, no. 12, Columbus, Ohio, US; abstract no. 48205, page 32

## Description

La présente invention concerne plus particulièrement des compositions constituées de résines polyester non saturées et de nouveaux additifs anti-retrait.

Les résines polyester non saturées sont utilisées dans de nombreux domaines d'application, en particulier pour le moulage d'objets renforcés par des fibres de verre. Elles sont largement mises en oeuvre pour la fabrication de pièces automobiles, de matériels et d'accessoires de salles de bain, de coffres pour appareils électroniques, d'ustensiles de cuisine, de pièces pour l'ameublement... Un inconvénient majeur de l'utilisation des résines polyester non saturées est dans le fait que ces résines présentent un retrait volumétrique important, lors du moulage, qui se produit au fur et à mesure que la résine polyester polymérise. Ce retrait volumétrique des résines polyesters conduit alors à une surface finie rugueuse qui permet de reconnaître les fibres de verre qui apparaissent généralement en saillie sur la surface du produit fini et laissent même deviner des ondulations.

La plupart des applications dans lesquelles rentrent les résines polyester non saturées, renforcées par des fibres de verre, nécessitent des surfaces finies impeccables. C'est le cas par exemple des pièces automobiles. On a proposé différentes techniques pour améliorer le fini de l'état de surface. On a par exemple utilisé la technique du sablage, suivie d'une opération de masticage. On a aussi proposé l'utilisation de couches de résines polyester sous forme de gels (gel-coat) qui permettent de masquer les fibres de verre. Toutes ces techniques qui sont laborieuses à mettre en oeuvre présentent les inconvénients d'augmenter les coûts de fabrication et de diminuer la productivité.

Des additifs anti-retrait ont été aussi proposés, parmi lesquels des polymères thermoplastiques. En particulier C.A.80 : 84093v décrit comme additif anti-retrait une solution de 20 à 30 parties d'un copolymère thermoplastique (tel qu'un copolymère comprenant 85% de méthacrylate de méthyle, 10% de méthacrylate de 2-hydroxyéthyle et 5% d'acide méthacrylique) dans 70 à 80 parties de styrène contenant moins de 20% d'au moins un hydroxyalkyl (méth)acrylate. Un composite obtenu à partir d'un polyester insaturé dans le styrène contenant cet additif présente un retrait de 3,1%. Cet additif est insoluble dans le styrène et non miscible avec le polyester insaturé, probablement en raison d'un poids moléculaire trop élevé, ce qui a pour conséquence un retrait volumétrique trop élevé.

Ces additifs anti-retrait connus présentent l'inconvénient de se séparer en deux couches lorsqu'ils sont additionnés aux résines polyester. C'est-à-dire qu'ils constituent un mélange qui n'est pas homogène, les constituants n'étant pas miscibles à température ambiante. Par ailleurs, il est souvent nécessaire de pigmenter les compositions résineuses, en particulier en teinte sombre. La mise en oeuvre de compositions résineuses faisant intervenir ces polymères thermoplastiques conduit à des compositions pigmentées qui, après moulage, sont le plus souvent homogènes. Elles ressemblent, d'un point de vue visuel, à des compositions résineuses sans additif anti-retrait, mais elles présentent l'inconvénient de ne pas pouvoir être stockées, ce qui oblige à les commercialiser en deux parties c'est-à-dire à livrer d'un côté les résines polyesters et de l'autre côté les additifs.

Le brevet américain US-A-3 701 748 décrit également une composition comprenant un polyester non saturé, du styrène et un copolymère de méthacrylate de méthyle et de méthacrylate de 2-hydroxyéthyle dont le poids moléculaire est 50 000. Cette composition possède après moulage un retrait volumétrique de 3.0 %.

Le besoin se fait donc sentir de mettre au point des compositions de polyester non saturées, contenant des additifs anti-retrait qui possèdent après moulage un plus faible retrait volumétrique, qui soient stockables et qui, lorsqu'elles sont pigmentées, doivent être homogènes et posséder de bonnes propriétés mécaniques. Ces additifs doivent, de plus, avoir la particularité d'être miscibles à température ambiante avec les résines polyester non saturées. La miscibilité, ou l'homogénéité, d'un mélange est établie lorsque celui-ci présente une et une seule température de transition vitreuse.

La présente invention concerne des compositions résineuses liquides convenant notamment pour le moulage d'objets renforcés de fibres de verre et pouvant être pigmentées de façon homogène, comprenant un polyester non saturé, au moins un monomère copolymérisable avec le polyester non saturé et choisi parmi le styrène, les styrènes substitués et les combinaisons desdits styrènes avec moins de 50 % en poids d'un autre monomère à insaturation éthyiènique choisi parmi les esters d'alkyle C₁ - C₄ d'acide acrylique ou méthacrylique, les acrylates et méthacrylates cycliques, aromatiques et bicycliques, les styrènes halogénés, le diméthacrylate de 1,3-butanediol et le phtalate de diallyle, et un polymère de méthacrylate d'alkyle partiellement hydroxylé, caractérisées en ce que ledit polymère de méthacrylate d'alkyle hydroxylé est un copolymère, soluble dans le monomère et miscible avec le polyester non saturé, de méthacrylate(s) d'alcoyle dont le groupe alcoyle a de 1 à 4 atomes de carbone, et de monomère(s) non saturé(s) porteur(s) d'au moins une fonction hydroxyle, ledit copolymère ayant un poids moléculaire compris entre 1 000 et 20 000.

On a trouvé que la mise en oeuvre des compositions résineuses selon l'invention permet d'obtenir après moulage des produits finis parfaitement homogènes ayant de bonnes propriétés mécaniques.

Le polymère de méthacrylate d'alkyle hydroxylé mis en oeuvre selon l'invention possède de préférence un équivalent hydroxyle par kilogramme de polymère compris entre 0,1 et 12 environ, de préférence entre 0,25 et 10, un poids moléculaire compris entre 1500 et 15000 environ, et une température de transition vitreuse comprise entre 30° et 100°C environ.

Ils sont obtenus par copolymérisation de méthacrylate(s) d'alcoyle dont le groupe alcoyle a de 1 à 4 atomes de carbone, et de monomère(s) non saturé(s) porteur(s) d'au moins une fonction hydroxyle choisi(s) de préférence parmi les produits suivants : alcool allylique, acrylates et méthacrylates d'hydroxyalkyle comme les (méth)acrylates de 2-hydroxyéthyle et d'hydroxypropyle, esters acryliques ou méthacryliques partiels de composés di-ou polyhydroxylés comme le mono(méth)acrylate d'éthylène glycol, de propylène glycol-1,2 ou 1,3, de butylène glycol-1,4, d'hexaméthylèneglycol 1,6, de diéthylène glycol, de triéthylène glycol, de dipropylène glycol, le mono(méth)-acrylate de glycérol, le mono(méth)acrylate de pentaérythritol, etc... Des agents de transfert de chaîne en quantité comprise entre 0 et 10 % en poids du polyméthacrylate d'alkyle choisis parmi l'éthylmercaptan, le n-octyl mercaptan, le n-dodécyl mercaptan, l'acide thioglycolique, le di-ester de l'éthylène glycol et de l'acide thioglycolique, le thioglycérol, peuvent être utilisés pour fixer avec précision la masse moléculaire des polyméthacrylates mis en oeuvre dans la présente invention. On utilise un initiateur de polymérisation radicalaire en quantité comprise entre 0,001 et 5 % et de préférence entre 0,1 et 3 % environ en poids par rapport au poids des réactifs de départ. Ces initiateurs sont choisis notamment parmi les peroxydes de benzoyle, de lauroyle, d'acétylcyclohexane sulfonyle, de diisobutyryle, de décanoyle, l'hydroperoxyde de t-butyle, les peroxydicarbonates de di-(2-éthylhexyle) et de diisopropyle, le peroxypivalate de t-butyle, l'azo-bis-(isobutyronitrile), l'acide 4,4'- azo-bis(4-cyanopentanoïque), le 3,3'-azo-bis-(3-cyanobutanol), etc...

Les polymères de méthacrylates d'alkyle hydroxylés mis en oeuvre selon la présente invention peuvent être obtenus par deux procédés différents selon le poids moléculaire souhaité : ceux de poids moléculaire ne dépassant pas 10 000 environ sont préparés de préférence en solution dans un solvant organique, notamment un hydrocarbure aromatique tel que le toluène, ou une cétone telle que la méthyléthylcétone ou la méthylisobutylcétone, à une température de 80° à 110°C environ ; ceux de poids moléculaire dépassant 10 000 environ sont de préférence préparés en suspension dans l'eau à une température de 70° à 95°C environ, en présence d'au moins un agent tensio-actif tel qu'un copolymère de méthacrylate de méthyle et d'acide méthacrylique, un phosphate disodique, un alcool polyvinylique, etc.

Les polyesters non saturés mis en oeuvre selon l'invention sont préparés en condensant un acide dicarboxylique ou son anhydride à insaturation éthylénique en alpha, bêta ou des mélanges de ces derniers avec un dialcool ou un mélange de dialcools ou de leurs oxydes. Comme exemples d'acides ou d'anhydrides dicarboxyliques non saturés on peut citer l'anhydride maléique, l'acide fumarique, l'acide itaconique, l'acide citraconique, et l'acide chloromaléique. On peut remplacer une faible proportion de l'acide dicarboxylique non saturé (jusqu'à 25 moles pour cent), par des acides dicarboxyliques saturés tels que les acides ortho-phtalique, isophtalique, téréphtalique, succinique, adipique, sébacique, méthyl succinique, etc. Les dialcools ou leurs oxydes mis en oeuvre avec les acides dicarboxyliques sont de façon connue : le 1,2-propanediol (propylène glycol), le dipropylène glycol, le diéthylène glycol, l'éthylène glycol, le 1,3-butanediol, le 1,4-butanediol, le néopentyl glycol, le triéthylène glycol, le tripropylène glycol, l'oxyde d'éthylène... De façon connue les réactifs sont mis en oeuvre de façon à ce que le polyester fini ait un facteur de poids moléculaire par double liaison compris entre 142 et 215 environ, de préférence entre 147 et 186. Les poly(fumarate de propylène), poly(fumarate d'éthylène et de propylène), poly(fumarate de dipropylène), poly(fumarate de propylène et de dipropylène), poly(isophtalate/fumarate de propylène), etc... sont préférés. On peut préparer ces polyesters à partir de l'anhydride maléique ou l'acide fumarique.

Les monomères copolymérisables avec le polyester non saturé sont, de façon connue, le styrène, les styrènes substitués comme le vinyl toluène, le tertiobutylstyrène. D'autres monomères à insaturation éthylénique qui peuvent le cas échéant être utilisés en combinaison avec les monomères ci-dessus, en des quantités inférieures à 50 % en poids, comprennent les esters d'alkyle inférieur (C₁ à C₄) d'acide acrylique et d'acide méthacrylique, l'alpha-méthylstyrène, les acrylates et méthacrylates cycliques, comme ceux de cyclohexyle, aromatiques comme ceux de benzyle, les méthacrylates et acrylates bi-cycliques comme ceux d'isobornyle, les styrènes halogénés comme le chlorostyrène et le dichlorostyrène, le diméthacrylate de 1,3-butanediol, le phtalate de diallyle, etc...

Les proportions des composants du système résineux de la présente invention varient fortement suivant les exigences de la composition de moulage et les applications finales envisagées. Le polyester non saturé peut être présent en des proportions de 20 à 80%, de préférence entre 25 et 60% et même entre 30 et 50% en poids par rapport au poids du système résineux. Le(s) monomère(s) copolymérisable(s) peu(ven)t être présent(s) en des proportions comprises entre 20 et 80% environ du poids du système résineux et de préférence entre 25 et 75%, et même entre 40 et 65% environ en poids du système résineux. Les fibres de verre éventuellement présentes pour le moulage d'objets renforcés sont mises en oeuvre en proportion comprise allant jusqu'à environ 90% en poids par rapport au poids de l'ensemble de la composition résineuse. L'additif anti-retrait peut être présent en des proportions comprises entre environ 1 et 30%, de préférence entre 5 et 20% par rapport au poids du système résineux.

Les compositions résineuses selon la présente invention peuvent en outre comprendre au moins un agent de démoulage tel que notamment un sel d'acide gras et de métal alcalin ou alcalino-terreux ou de zinc. Comme exemples de ces sels on peut citer les stéarates de zinc, de calcium, de lithium, de baryum et de magnésium, ainsi que le sel de calcium de l'acide montanique. Ce dernier sel est un sel de calcium d'une coupe d'acide gras en C₂₄, C₂₆, C₃₀, C₃₂, et C₂₈ l'acide montanique de formule C₂₇H₅₅COOH étant majoritaire. Ce sel est fabriqué à partir d'un produit naturel, la cire de montan, qui est extraite de lignites. Ce sel est fabriqué en oxydant la cire de montan à l'aide par exemple d'un mélange sulfochromique à chaud : les produits d'oxydation obtenus (acides gras) sont ensuite neutralisés par du carbonate ou de l'hydroxyde de calcium. Le montanate commercial généralement disponible contient environ 5% de calcium et jusqu'à environ 3% en poids d'acides libres. L'agent de démoulage est utilisé de préférence en quantité comprise entre environ 1 et 8% en poids par rapport au poids de la résine polyester insaturé et du monomère copolymérisable mis en oeuvre avec la résine polyester.

Les compositions résineuses selon la présente invention peuvent être utilisées dans des compositions pour moulage en masse. Ces "compositions de moulages dans la masse" (en anglais bulk molding compouds : BMC) sont constituées de résines polyesters insaturés dans un monomère copolymérisable additionnées d'un peroxyde organique comme catalyseur de polymérisation, de charges comme le carbonate de calcium, de 10 à 30% environ en poids de fibres de verre, d'un agent de démoulage et de l'agent anti-retrait selon l'invention. Après avoir réalisé le mélange, la composition moulable est introduite dans un moule de forme appropriée, le moule est ensuite fermé et chauffé pour polymériser la composition. Le moulage peut être réalisé en utilisant toutes les techniques connues dans cette technologie : moulage par compression, transfert, injection/compression et injection. Pendant le moulage, le moule est maintenu à une température comprise entre 130 et 180°C environ et à une pression de 30 à 100 bars environ au plus pendant 2 minutes. Selon cette technique on peut fabriquer des objets moulés de toutes sortes tels que notamment des réflecteurs de lampes pour automobiles qui, après démoulage, sont soumis à un traitement d'aluminage, de préférence après dépôt d'un vernis de résine polyester, époxy ou acrylique.

Les compositions résineuses selon la présente invention peuvent également être utilisées dans des systèmes et compositions pour moulage en feuille (par abréviation SMC), pour moulage par injection et pour moulage par transfert de résine (par abréviation RTM)

Les exemples suivants illustrent la présente invention : toutes les parties et tous les pourcentages sont indiqués en poids, sauf indication contraire.

### EXEMPLE 1 : (Comparatif)

On réalise un mélange à partir de 56 parties de résine polyester insaturée en solution à 66% d'extrait sec dans le styrène, de 30 parties de solution à 50% dans le styrène de polyméthacrylate de méthyle de masse moléculaire 50 000 (les masses moléculaires sont déterminées par chromatographie par exclusion de tailles) et de 14 parties de styrène.

La résine polyester insaturée utilisée est fabriquée à partir de 98 parties d'anhydride maléique et de 84 parties de propane-diol jusqu'à obtenir une masse moléculaire moyenne en nombre de 1 500 environ : son indice d'acide est de 30 et son indice d'hydroxyle de 45. Elle est ensuite diluée dans le styrène en présence d'hydroquinone utilisée comme inhibiteur.

Dans le mélange précédemment réalisé, non miscible et qui se sépare rapidement, on disperse 4 parties de pigment de noir d'acétylène, ainsi que 0,02% de parabenzoquinone, et 1,5% de perbenzoate de tertiobutyle utilisé comme initiateur de réticulation.

Cette préparation est mise en oeuvre entre les plateaux d'une presse chauffée à 140°C, à l'interface de 2 feuilles de polyéthylène téréphtalate dont l'épaisseur et l'étanchéité sont assurées par une cale d'épaisseur 4 mm en Téflon. Après 4 minutes de cuisson, l'échantillon présente une teinte homogène ; la préparation, non miscible, est pigmentable. Le milieu présente deux températures de transition vitreuse.

### EXEMPLE 2 (Comparatif)

On réalise un mélange semblable à celui réalisé dans l'exemple 1, en remplaçant le polyméthylméthacrylate de méthyle par 37,5 parties de polyacétate de vinyle de masse moléculaire 40 000 (vendu sous la marque LP 40A par UNION CARBIDE), en solution à 40 % d'extrait sec dans le styrène. Dans ces conditions la quantité de styrène ajoutée est de 6,5 parties.

Le mélange est miscible et pour des conditions de mise en oeuvre identiques à celles de l'exemple précédent, l'échantillon présente une teinte non homogène : la préparation est miscible mais non pigmentable.

### EXEMPLE 3

On réalise un mélange identique à celui réalisé dans l'exemple 1, en remplaçant le polyméthacrylate de méthyle par une quantité identique de polyméthacrylate de méthyle de masse moléculaire 1560, de température de transition vitreuse Tg = 57°C, et qui possède 0,5 équivalent hydroxyle par kilogramme de polymère.

Ce polymère hydroxylé est obtenu par polymérisation en coulée continue, à 90°C dans le toluène, de 1 900 parties de méthacrylate de méthyle en présence de 41 parties d'azobisisobutyronitrile utilisé comme initiateur, et de 78 parties de mercapto-éthanol utilisé comme agent de transfert de chaîne. En fin de polymérisation, le toluène est éliminé ; on ajoute alors 0,01% d'hydroquinone comme inhibiteur de polymérisation et la quantité de styrène nécessaire pour obtenir l'extrait sec recherché.

Le mélange, qui est miscible, est mis en oeuvre à diverses températures en présence d'un système catalytique adéquat :
- à 60°C avec 1,5% de peroxyde d'acétylacétone, 0,35% d'octoate de cobalt à 6% de métal, 0,15% de diméthyl-paratoluidine et 0,02% d'hydroquinone ;
- à 110°C avec 1,5% de peroctoate de tertiobutyle et 0,02% de parabenzoquinone ;
- à 145°C avec 1,5% de perbenzoate de tertiobutyle et 0,02% de parabenzoquinone.

Quelles que soient les conditions de catalyse, les échantillons présentent une teinte homogène : la préparation est miscible et pigmentable.

### EXEMPLE 4 (Comparatif)

On réalise un mélange identique à celui réalisé dans l'exemple 3, en utilisant un polyméthacrylate de méthyle de même masse moléculaire, mais qui ne porte pas de fonction hydroxyle. On utilise pour cela de l'octyl mercaptan comme agent de transfert de chaîne.

Le mélange n'est pas miscible et sa mise en oeuvre dans les différentes conditions de température et de catalyse décrites dans l'Exemple 3 conduit à des éprouvettes qui ne présentent pas de teinte homogène : la préparation est non miscible et non pigmentable.

### EXEMPLES 5 et 6

On réalise selon le mode opératoire décrit dans l'Exemple 3, d'autres polyméthylméthacrylates de masses moléculaires et de teneurs en fonctions hydroxyles différentes :
- 4 250 et 0,49 fonction hydroxyle par kilogramme avec une température de transition vitreuse de 93°C pour l'Exemple 5 ;
- 5 170 et 0,50 fonction hydroxyle par kilogramme avec une Tg de 101°C pour l'Exemple 6.

Le polymère de masse moléculaire égale à 4 250 est obtenu à partir de 7 600 parties de méthacrylate de méthyle, de 390 parties de méthacrylate de 2-hydroxyéthyle, de 78 parties de mercapto-éthanol et de 41 parties d'azobisisobutyronitrile.

Le polymère de masse moléculaire égale à 5 170 est obtenu à partir de 15 200 parties de méthacrylate de méthyle, de 910 parties de méthacrylate de 2-hydroxyéthyle et de 41 parties d'azobisisobutyronitrile.

Les mélanges de composition identique à ceux décrits dans l'Exemple 3 réalisés à partir de chacun de ces additifs sont miscibles. Lorsqu'ils sont mis en oeuvre à 110 et 145°C, avec les systèmes catalytiques correspondants, ils conduisent à des éprouvettes qui présentent une teinte homogène : les préparations sont miscibles et pigmentables.

### EXEMPLE 7

On prépare tout d'abord un polyméthacrylate de méthyle de masse moléculaire moyenne 2 400 et qui possède 0,49 équivalent hydroxyle par kilo de polymère selon le mode opératoire décrit dans l'Exemple 3 en utilisant 3 800 parties de méthacrylate de méthyle, 130 parties de méthacrylate de 2-hydroxyéthyle, 78 parties de mercapto-éthanol et 41 parties d'azobisisobutyronitrile.

Cet additif est mis en oeuvre selon la formulation suivante :

| | |
|---|---|
| Résine polyester insaturée (celle de l'Exemple 1) | 68 |
| Polyméthacrylate hydroxylé (à 47% dans le styrène) | 32 |
| Agent de démoulage (Acmos 82805) | 1 |
| Hydroquinone | 0,02 |
| Noir d'acétylène | 4 |
| Carbonate de calcium (Millicarb OMYA) | 40 |
| Octoate de cobalt à 6% de métal | 0,35 |
| Diméthylparatoluidine | 0,15 |
| Peroxyde d'acétylacétone | 1,5 |
| Mat de verre | 35 |
| Température de moulage (°C) | 60 |
| Temps de cuisson (minutes) | 6 |
| Pression de moulage (bar) | 20 |

Ce mélange est mis en oeuvre dans une formulation du type RTM (moulage par le transfert de résine).

On utilise la presse décrite dans l'Exemple 1. Un moule de compression (pièce carrée de 10 cm de côté et de 4 mm d'épaisseur) est installé entre les plateaux. Le mélange est coulé le moule ouvert qui contient le renfort de verre puis la presse est rapidement refermée.

Après démoulage, la pièce présente une teinte homogène et un retrait linéaire limité à 0,07%.

Cette formulation conduit à un mélange miscible, pigmentable et à retrait compensé.

### EXEMPLE 8

On réalise une formulation du type composition pour moulage en feuilles à partir du polyméthacrylate de méthyle de l'Exemple 5.

Cet additif est mis en oeuvre dans la formulation suivante :

| | |
|---|---|
| Résine polyester insaturée (celle de l'Exemple 1) | 53 |
| Polyméthacrylate hydroxylé (à 50% dans le styrène) | 30 |
| Styrène | 17 |
| Agent de démoulage (Acmos 82805) | 1,5 |
| Parabenzoquinone | 0,02 |
| Noir d'acétylène | 4 |
| Magnésie | 4,5 |
| Carbonate de calcium (Millicarb OMYA) | 120 |
| Perbenzoate de tertiobutyle | 1,5 |
| Fibres de verre coupées | 55 |
| Température de moulage (°C) | 135 |
| Temps de cuisson (minutes) | 4 |
| Pression de moulage (bar) | 80 |

On utilise la presse et le moule décrits dans l'Exemple 7. La pâte est déposée entre les plateaux du moule et la presse est refermée rapidement.

Après le démoulage, la pièce moulée présente un retrait linéaire de 0,05 %.

Cette formulation conduit à un mélange miscible à retrait compensé.

### EXEMPLE 9

On réalise une formulation de type composition pour moulage en masse, en utilisant le polyméthacrylate de méthyle de l'Exemple 6.

Cet additif est mis en oeuvre selon la formulation suivante :

| | |
|---|---|
| Résine polyester insaturée (celle de l'Exemple 1) | 53 |
| Polyméthacrylate hydroxylé (à 50% dans le styrène) | 30 |
| Styrène | 17 |
| Agent de démoulage (Acmos 82805) | 1,5 |
| Parabenzoquinone | 0,02 |
| Noir d'acétylène | 4 |
| Carbonate de calcium | 250 |
| Peroctoate de tertiobutyle | 1,5 |
| Fibres de verre | 90 |
| Température de moulage (°C) | 150 |
| Temps de cuisson (minutes) | 3 |
| Pression de moulage (bar) | 80 |

On utilise la presse et le moule décrits dans l'Exemple 7. La pâte est déposée entre les plateaux du moule et la presse est refermée rapidement.

Après démoulage, la pièce a subi un gonflement de 0,05%.

Cette formulation conduit à un mélange miscible, à bel aspect de surface.

### EXEMPLE 10

On prépare une formulation du type composition pour moulage en masse à partir de 70 parties en poids de la résine polyester insaturée de l'Exemple 1 et de 30 parties en poids du polyméthacrylate hydroxylé de l'Exemple 3 (à 50 % dans le styrène).

Ce mélange est mis en oeuvre selon la formulation et le mode opératoire de l'Exemple 9.

Après démoulage, la pièce a un retrait de 0,15% et présente une coloration homogène.

Cette formulation conduit à un mélange miscible, pigmentable à retrait partiellement composé.

### EXEMPLE 11 :

On prépare tout d'abord un polyméthacrylate de méthyle de masse moléculaire moyenne 13000 et qui possède 5,2 équivalent hydroxyle par kilogramme de polymère selon le mode opératoire suivant :

L'agent de suspension est obtenu par mélange de 7,5 g de Rohagit MV (Rohm et Haas), 31,2 g de phosphate disodique anhydre et 960 g d'eau. On charge dans un réacteur 450 g d'eau, 50 g de NaCl, 30 g d'agent de suspension, 240 g de méthacrylate de méthyle, 48 g de méthacrylate d'hydroxyéthyle, 4 g de lauryl mercaptan et 2 g de peroxyde de lauryle. Le mélange est porté à 77°C sous agitation violente et couverture d'azote. Au bout de 20 minutes on rajoute 20 g d'agent de suspension et l'on maintient la température constante durant 1 heure. A l'issue de l'effet gel, la température est maintenue constante durant 1 heure. Puis le mélange est refroidi, lavé et séché. Le polymère obtenu est mis en solution dans le styrène en présence de 0,01% d'hydroquinone.

Cet additif est mis en oeuvre selon la formulation suivante :

| | |
|---|---|
| Résine polyester insaturée (celle de l'Exemple 1) | 56 |
| Polyméthacrylate hydroxylé (à 50% dans le styrène) | 44 |
| Agent de démoulage (stéarate de calcium) | 4 |
| Parabenzoquinone | 0,02 |
| Noir d'acétylène | 4 |
| Carbonate de calcium | 250 |
| Perbenzoate de tertiobutyle | 1,5 |
| Fibres de verre | 90 |
| Température de moulage (°C) | 150 |
| Temps de cuisson (minutes) | 3 |
| Pression de moulage (bar) | 80 |

On utilise une presse industrielle sur laquelle est monté un monte disque de diamètre 200 mm

Après démoulage, la pièce a subi un gonflement de 0,05%.

Cette formulation conduit à un mélange miscible, à bel aspect de surface.

## Revendications

1. Compositions résineuses liquides comprenant un polyester non saturé, au moins un monomère copolymérisable avec le polyester non saturé et choisi parmi le styrène, les styrènes substitués et les combinaisons desdits styrènes avec moins de 50 % en poids d'un autre monomère à insaturation éthylènique choisi parmi les esters d'alkyle C₁ - C₄ d'acide acrylique ou méthacrylique, les acrylates et méthacrylates cycliques, aromatiques et bicycliques, les styrènes halogénés, le diméthacrylate de 1,3-butanediol et le phtalate de diallyle, et un polymère de méthacrylate d'alkyle partiellement hydroxylé, caractérisées en ce que ledit polymère de méthacrylate d'alkyle hydroxylé est un copolymère, soluble dans le monomère et miscible avec le polyester non saturé, de méthacrylate(s) d'alcoyle dont le groupe alcoyle a de 1 à 4 atomes de carbone, et de monomère(s) non saturé(s) porteur(s) d'au moins une fonction hydroxyle, ledit copolymère ayant un poids moléculaire compris entre 1 000 et 20 000.

2. Compositions résineuses selon la revendication 1, caractérisées en ce que le polymère de méthacrylate d'alkyle hydroxylé possède un équivalent hydroxyle par kilogramme de polymère compris entre 0,1 et 12.

3. Compositions résineuses selon la revendication 1 ou la revendication 2, caractérisées en ce que le poids moléculaire du polymère de méthacrylate d'alkyle hydroxylé est compris entre 1 500 et 15 000.

4. Compositions résineuses selon l'une quelconque des revendications 1 à 3, caractérisées en ce que le polymère de méthacrylate d'alkyle hydroxyle possède un équivalent hydroxyle par kilogramme de polymère compris entre 0,25 et 10.

5. Compositions résineuses selon l'une quelconque des revendications 1 à 4, caractérisées en ce que le méthacrylate d'alcoyle est le méthacrylate de méthyle.

6. Compositions résineuses selon l'une quelconque des revendications 1 à 5, caractérisées en ce que le monomère non saturé porteur d'au moins une fonction hydroxyle est le méthacrylate de 2-hydroxyéthyle.

7. Compositions résineuses selon l'une quelconque des revendications 1 à 5, caractérisées en ce que le polyester non saturé possède un facteur de poids moléculaire par double liaison compris entre 142 et 215.

8. Compositions résineuses selon la revendication 7, caractérisées en ce que le polyester non saturé possède un facteur de poids moléculaire par double liaison compris entre 147 et 186.

9. Compositions résineuses selon l'une quelconque des revendications 1 à 8, caractérisées en ce que le polymère de méthacrylate d'alkyle partiellement hydroxylé est présent à raison de 1 % à 30 % en poids de la composition résineuse.

10. Compositions résineuses selon la revendication 9, caractérisées en ce que le polymère de méthacrylate d'alkyle partiellement hydroxylé est présent à raison de 5 % à 20 % en poids de la composition résineuse.

11. Compositions résineuses selon l'une quelconque des revendications 1 à 10, caractérisées en ce que le polyester non saturé est présent à raison de 30 % à 50 % en poids de la composition résineuse.

12. Compositions résineuses selon l'une quelconque des revendications 1 à 11, caractérisées en ce que le monomère copolymérisable est présent en une proportion comprise entre 40 % et 65 % en poids de la composition résineuse.

13. Compositions résineuses selon l'une quelconque des revendications 1 à 12, caractérisées en ce qu'elle comprennent en outre des fibres de verre en une proportion allant jusqu'à 90 % en poids de la composition résineuse.

14. Compositions résineuses selon l'une quelconque des revendications 1 à 13, caractérisées en ce qu'elles comprennent en outre au moins un agent de démoulage.

15. Compositions résineuses selon la revendication 14, caractérisées en ce que l'agent de démoulage est présent à raison de 1 % à 8 % en poids par rapport au poids du polyester non saturé et du monomère copolymérisable.

16. Utilisation d'une composition résineuse selon l'une des revendications 1 à 15 dans des compositions pour moulage en masse, pour moulage en feuille, pour moulage par injection ou pour moulage par transfert.

17. Utilisation selon la revendication 16 dans des compositions pour moulage en masse, caractérisée en ce que la composition résineuse comprend en outre des charges et un peroxyde organique.

## Patentansprüche

1. Flüssige Harzzusammensetzungen umfassend einen ungesättigten Polyester, mindestens ein mit dem ungesättigten Polyester copolymerisierbares Monomer ausgewählt aus Styrol, substituierten Styrolen und Kombinationen dieser Styrole mit mindestens 50 Gew.-% eines anderen Monomers mit ethylenischer Unsättigung ausgewählt aus C₁-C₄-Alkylestern von Acrylsäure oder Methacrylsäure, cyclischen, aromatischen und bicyclischen Acrlyaten und Methacrylaten, halogenierten Styrolen, 1,5-Butandioldimethacrylat und Diallylphthalat, und ein teilweise hydroxyiertes Alkylmethacrylat-polymer, **dadurch gekennzeichnet,** daß das hydroxylierte Alkylmethacrylat-polymer ein in dem Monomeren lösliches und mit dem ungesättigten Polyester mischbares Copolymer aus Alkylmethacrylat(en), deren Alkylgruppe 1 bis 4 Kohlenstoffatome aufweist, und einem oder mehreren, ungesättigten Monomeren, die mindestens eine Hydroxylgruppe aufweisen, ist, wobei das Copolymer ein Molekulargewicht zwischen 1000 und 20000 aufweist.

2. Harzzusammensetzungen nach Anspruch 1, **dadurch gekennzeichnet,** daß das hydroxylierte Alkylmethacrylat-polymer pro Kilogramm des Polymers ein Hydroxyläquivalent zwischen 0.1 und 12 aufweist.

3. Harzzusammensetzungen nach Anspruch 1 oder 2, **dadurch gekennzeichnet,** daß das Molekulargewicht des hydroxylierten Alkylmethacrylat-polymers zwischen 1500 und 15000 liegt.

4. Harzzusammensetzungen nach einem der Ansprüche 1 bis 3, **dadurch gekennzeichnet,** daß das hydroxylierte Alkylmethacrylat-polymer pro Kilogramm des Polymers ein Hydroxyläquivalent zwischen 0,25 und 10 aufweist.

5. Harzzusammensetzungen nach einem der Ansprüche 1 bis 4, **dadurch gekennzeichnet,** daß das Alkylmethacrylat Methylmethacrylat ist.

6. Harzzusammensetzungen nach einem der Ansprüche 1 bis 5, **dadurch gekennzeichnet,** daß das ungesättigte Monomer, welches mindestens eine Hydroxylfunktion trägt, 2-Hydroxyethyl-methacrylat ist.

7. Harzzusammensetzungen nach einem der Ansprüche 1 bis 5, **dadurch gekennzeichnet,** daß der ungesättigte Polyester einen Molekulargewichtsfaktor pro Doppelbindung zwischen 142 und 215 besitzt.

8. Harzzusammensetzungen nach Anspruch 7, **dadurch gekennzeichnet,** daß der ungesättigte Polyester einen Molekulargewichtsfaktor pro Doppelbindung zwischen 147 und 186 aufweist.

9. Harzzusammensetzungen nach einem Ansprüche 1 bis 8, **dadurch gekennzeichnet,** daß das teilweise hydroxylierte Alkylmethacrylat-polymer in einer Menge von 1 bis 30 Gew.-%, bezogen auf die Harzzusammensetzung, vorhanden ist.

10. Harzzusammensetzungen nach Anspruch 9, **dadurch gekennzeichnet,** daß das teilweise hydroxylierte Alkylmethacrylat-polymer in einer Menge von 5 bis 20 Cew.-%, bezogen auf die Harzzusammensetzung, vorhanden ist.

11. Harzzusammensetzungen nach einem der Ansprüche 1 bis 10, **dadurch gekennzeichnet,** daß der ungesättigte Polyester in einer Menge von 30 bis 50 Gew.-%, bezogen auf die Harzzusammensetzung, vorhanden ist.

12. Harzzusammensetzungen nach einem der Ansprüche 1 bis 11, **dadurch gekennzeichnet,** daß das copolymerisierbare Monomer in einer Menge zwischen 40 und 65 Gew.-%, bezogen auf die Harzzusammensetzung, vorhanden ist.

13. Harzzusammensetzungen nach einem der Ansprüche 1 bis 12, **dadurch gekennzeichnet,** daß sie zusätzlich Glasfasern in einer Menge von bis zu 90 Gew.-% der Harzzusammensetzung enthalten.

14. Harzzusammensetzungen nach einem der Ansprüche 1 bis 13, **dadurch gekennzeichnet,** daß sie zusätzlich mindestens ein Entformungshilfsmittel enthalten.

15. Harzzusammensetzungen nach Anspruch 14, **dadurch gekennzeichnet,** daß das Entformungshilfsmittel in einer Menge von 1 bis 8 Gew.-%, bezogen auf den ungesättigten Polyester und das copolymerisierbare Monomer vorhanden ist.

16. Verwendung einer Harzzusammensetzung nach einem der Ansprüche 1 bis 15 in Zusammensetzungen zum Formen aus der Masse, zum Formen zu Blättern oder Bahnen, zum Spfizverformen oder zum Transferverformen.

17. Verwendung nach Anspruch 16 für Zusammensetzungen zum Formen aus der Masse, **dadurch gekennzeichnet,** daß die Harzzusammensetzung zusätzlich Füllstoffe und ein organisches Peroxid enthält.

## Claims

1. Liquid resinous compositions comprising an unsaturated polyester, at least one monomer copolymerisable with the unsaturated polyester and selected from styrene, substituted styrenes and combinations of the said styrenes with less than 50% by weight of another ethylene-unsaturated monomer selected from the alkyl esters C₁ - C₄ of acrylic or methacrylic acid, the cyclic, aromatic and bicyclic acrylates and methacrylates, the halogenated styrenes, 1,3-butanediol dimethacrylate and diallyl phthalate, and a partially hydroxylated alkyl methacrylate polymer, characterised in that the said hydroxylated ally methacrylate polymer is a copolymer, soluble in the monomer and miscible with the unsaturated polyester, of alkyl methacrylate(s), of which the alkyl group has from 1 to 4 carbon atoms, and unsaturated monomer(s) carrying at least one hydroxyl function, the said copolymer having a molecular weight of between 1000 and 20,000.

2. Resinous compositions according to claim 1, characterised in that the hydroxylated alkyl methacrylate polymer has a hydroxyl equivalent per kilogram of polymer of between 0.1 and 12.

3. Resinous compositions according to claim 1 or claim 2. characterised in that the molecular weight of the hydroxylated alkyl methacrylate polymer is between 1500 and 15,000.

4. Resinous compositions according to any one of claims 1 to 3, characterised in that the hydroxylated alkyl methacrylate polymer has a hydroxyl equivalent per kilogram of polymer of between 0.25 and 10.

5. Resinous compositions according to any one of claims 1 to 4, characterised in that the alkyl methacrylate is methyl methacrylate.

6. Resinous compositions according to any one of claims 1 to 5, characterised in that the unsaturated monomer carrying at least one hydroxyl function is 2-hydroxyethyl methacrylate.

7. Resinous compositions according to any one of claims 1 to 5, characterised in that the unsaturated polyester has a double-bond molecular weight factor of between 142 and 215.

8. Resinous compositions according to claim 7, characterised in that the unsaturated polyester has a double-bond molecular weight factor of between 147 and 186.

9. Resinous compositions according to any one of claims 1 to 8, characterised in that the partially hydroxylated alkyl methacrylate polymer is present in a ratio of 1% to 30% by weight of the resinous composition.

10. Resinous compositions according to claim 9, characterised in that the partially hydroxylated alkyl methacrylate polymer is present in a ratio of 5% to 20% by weight of the resinous composition.

11. Resinous compositions according to any one of claims 1 to 10, characterised in that the unsaturated polyester is present in a ratio of 30% to 50% by weight of the resinous composition.

12. Resinous compositions according to any one of claims 1 to 11, characterised in that the copolymerisable monomer is present in a proportion of between 40% and 65% by weight of the resinous composition.

13. Resinous compositions according to any one of claims 1 to 12, characterised in that they additionally comprise glass fibres in a proportion of up to 90% by weight of the resinous composition.

14. Resinous compositions according to any one of claims 1 to 13, characterised in that they additionally comprise at least one mould-release agent.

15. Resinous compositions according to claim 14, characterised in that the mould-release agent is present in a ratio of 1 % to 8% by weight relative to the weight of the unsaturated polyester and the copolymerisable monomer.

16. Use of a resinous composition according to any one of claims 1 to 15 in compounds for bulk moulding, sheet moulding, injection moulding or transfer moulding.

17. Use according to claim 16 in bulk moulding compounds, characterised in that the resinous composition additionally comprises fillers and an organic peroxide.
